# EUROPEAN PATENT APPLICATION

(11) **EP 1 705 556 A1**
(43) Date of publication of application: **27.09.2006**
(21) Application number: 06111533.3
(22) Date of filing: 22.03.2006
(51) Int. Cl.: G06F 3/12

(54) **Structuring a staggered job termination pattern**

(30) Priority: 25.03.2005 EP 05102432
(71) Applicant: Océ-Technologies B.V., 5914 CC Venlo (NL)
(72) Inventor: Van den Tillaart, Robertus C.W.T.M., 5422 BJ, GEMERT (NL)
(74) Representative: van Meeteren, Arend Anthonie

(57) **Abstract**

A method executes a printing job on a sequence of a first plurality of printer facilities through dividing the printing job into partial jobs and selectively assigning each partial job to a respective printer facility for through so distributing the partial jobs over said printer facilities attaining an improved throughput for the printing job.

In particular, the method structures a job termination pattern by assigning to a particular printer facility of said plurality a partial job that will complete earlier than a partial job assigned to another printer facility of said plurality by a time difference based on, and preferably at least as long as, a predetermined non-zero time interval. Such a time interval may be defined by an opeartor in advance.

All printer facilities involved in a printing job are assigned respective partial jobs so that their sequence of completion time instants, in compliance with the user-selected time interval, will constitute a monotonously non-decreasing series.

## Description

The invention relates to a method for executing a printing job on a plurality of printer facilities comprising dividing said printing job into partial jobs and selectively assigning each said partial job to a respective printer facility for attaining an improved throughput for said printing job.

Next to the printing from input data, the present invention similarly relates to copying, where the original is presented as a physical product, usually on paper. Hereinafter, such copying is likewise referred to as "printing" for reasons of brevity.

### BACKGROUND OF THE INVENTION

Generally, the dividing of a big and distributable load over a plurality of execution facilities is an well-known solution. This approach is also known in the printing art for distributing large print jobs over several printer facilities. Generally, the load is distributed in such manner that all facilities will complete at substantially the same instant, as is, for instance, disclosed in UK Patent Application 2 368 954.

The present inventor has however recognized a shortfall of this solution in that often completion of a partial job will necessitate some personal attention or "service" by an operator, such as by removing the printing result, manual feeding to a finishing station, or other. If all printer facilities will terminate at substantially the same instant, the operator will have to keep some of the facilities waiting. A similar problem could be due to a machine system for product handling that could only service less than all printer facilities concurrently.

### SUMMARY OF THE INVENTION

In consequence, amongst other things, it is an object of the present invention to further improve the throughput of a plurality of printer facilities for a distributable printing job.
Now therefore, according to one of its aspects, the invention is characterized according to the characterizing part of Claim 1.

Basically, the present invention involves having the various partial printing jobs terminate at staggered instants for allowing particular attention or service operation during such staggered intervals. In particular, the invention often involves deliberately scheduling certain partial jobs to finish later, to thereby producing the final result at an earlier instant. Thus, staggering such terminations in time would in various instances improve throughput, without requiring extra effort from the operator. Another advantage of the invention were that often, certain printer facilities will become available for other work at relatively earlier instants in time.

The time difference between the completion instants of any two partial jobs may be predetermined as a system default, possibly programmed by a system engineer at installation, but it may also be user-selectable, e.g. through a user interface, in order to give the operator of the printers the opportunity to tune the job processing to his activities. The system then calculates a division of the printing jobs into partial jobs, that is based on the time differences specified by the operator. In particular, the printing job is preferably divided on existing divisions within the job, e.g., between copies when a job contains a plurality of copies. Such a division makes it easier for the operator to put the printed copies of the job together without errors.

The time differences between partial job completions as calculated by the system are preferably at least as long as a time interval actually entered by the operator through the user interface, but the composition of the printing job may not always allow a division that has completion time differences that exactly conform to the operator's wishes. In that case, the division is preferably made such that at least most of the partial jobs have completion times that are at least apart by the time interval as defined by the operator.

Of course, printing jobs may also be divided on another division level, such as sub-sets or even print sheets.

Advantageously, the above method is applied on a set of printers having mutually disparate throughput speeds, through assigning the last partial job termination instant to the printer facility with the fastest throughput. This will effectively raise overall throughput through delaying the termination instant of the fastest printer facility.

In an embodiment, the invention also provides for a dividing and assigning process that is based on temporal availability of the various printer facilities. Thus, a printer that is occupied by another printing job, may become available later than the start of the present job, may still be involved. Since the printers are all centrally managed, their job completion times are known to the system and can be used in the scheduling process.

The invention also relates to an apparatus that is arranged for implementing the above-described method. Further advantageous aspects of the invention are recited in dependent Claims.

### BRIEF DESCRIPTION OF THE DRAWING

These and further features, aspects and advantages of the invention will be discussed more in detail hereinafter with reference to the disclosure of preferred embodiments of the invention, and in particular with reference to the appended Figures that illustrate:
Figure 1, a block diagram of a printer arrangement with three printers;
Figure 2, a first printing assignment pattern;
Figure 3, a second printing assignment pattern;
Figure 4, a third printing assignment pattern;
Figure 5, a sample flowchart for use with the invention;
Figure 6, a sample graphical user interface for the print job scheduler.

### DETAILED DESCRIPTION OF PREFERRED EMBODIMENTS

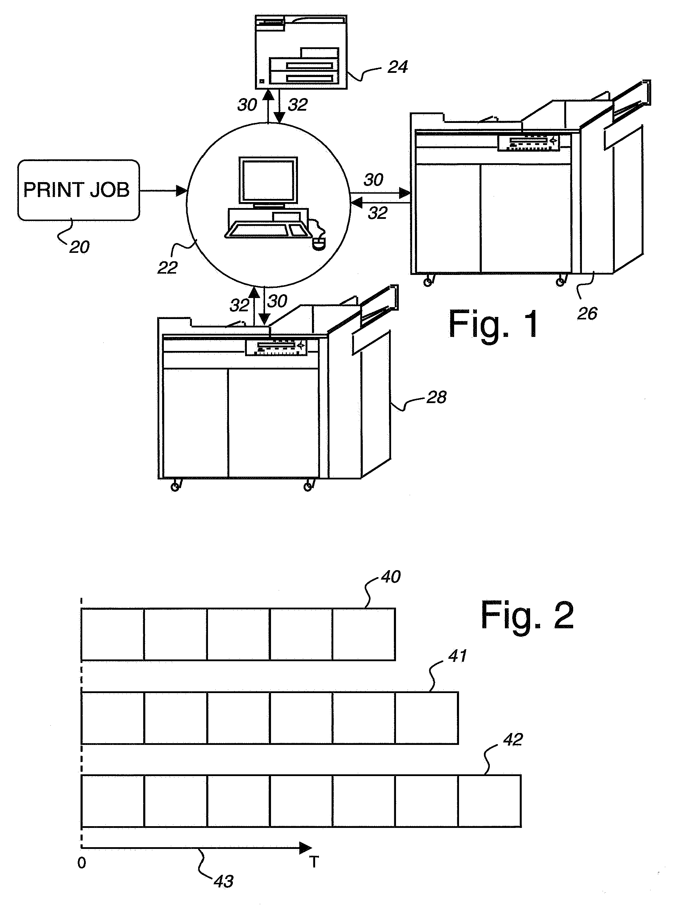

Figure 1 illustrates a block diagram of a printer arrangement with three printers. At left, block 20 symbolizes a printing job that must be executed by the three printers 24, 26, 28 at right. The printers may be of any kind and do not have to be the same. The job is routed to print job scheduler 22, that may be implemented in a PC. The print job scheduler 22 divides the printing job into partial jobs, preferably along existing divisions, such as copies, when the printing job specifies several copies to be made of one digital document. Division may also be made at page level, especially when the printing job is a single copy of a digital document. Further, the print job scheduler 22 assigns the partial jobs to the various printers. Commands thereto are routed along arrows 30, whereas return-signalizations are routed along lines 32. Preferably, all connections are implemented by a digital network, such as a local area network, a wide area network or the internet, a corporate intranet, or the like.

Commands would include starting instants, number of sets to be printed, job identifiers, and the like. Return-signalizations would include O.K, partial job ready, number of sets yet to be done, printing interrupts such as through paper out or jamming, and various other. By itself, persons skilled in the art would know to design schedulers, given the requirements as specified.

The algorithm used by the scheduler could be logical, wherein a set of equations is evaluated through inserting various parameters. The result thereof is the assignment of the various partial jobs to the various printers. Another preferred solution is by heuristics, wherein one or more tentative assignments are evaluated, and the best thereof is selected for effecting the assignment. If necessary, still further tentative assignments may be tried.

Figure 2 illustrates a first printing assignment pattern. Each block represents one printing set or copy on a time scale (T) as represented by arrow 43. All partial jobs 40, 41, 42 start concurrently at left, at T=0. The three printers collectively execute a printing job of 18 sets, distributed into groups of 5, 6 and 7 sets, respectively. At right, the partial jobs have staggered termination instants. If the operator's effort at terminating a partial job equals the length of one block, the whole job will be finished after 8 block lengths. If all blocks would terminate at the same instant, the whole job will be finished after 6 (printing) + 3 (operator activity) = 9 block lengths. Thus, using the present invention, the same amount of work is done in less time. Furthermore, the usage ratio of the printers could be raised as well. If a printer can be made to restart immediately after the operator service terminates, idle time would represent only 3 blocks, and usage ratio is 18/21 = 86 %. If the partial jobs have the same size, all blocks would terminate at the same instant, idle would represent 1 + 2 + 3 = 6 blocks, and usage ratio would decline to 18/24 = 75 %.

If the operator activity takes more time, such as 1½ block, the improvement would be still greater. If the operator activity takes less time, the improvement would be less. In the case of ½ block only, both schemes have equal overall ready delay. Nevertheless, printer use ratio for the invention would still be better. Of course, in the case where only brief operator activity were required, the size of the staggering could also be taken less, if feasible. If the required post-processing time were zero, the outcome of the algorithm would be that all printers terminate at the same instant, just as according to the above UK Patent reference.

Basically, the present invention can be applied also when a plurality of operators is present. The logic-based algorithm would then tend to be more complex, but still straightforward. The same applies if the post-processing time is a function of the size of the partial job, is non-uniform for the various operators, for the various partial facilities, or in the course of time. An example of the latter would be that during absence of the operator, such as during lunch time, post-service may be stalled, so that it would be advantageous to have as many printers as possible running through the whole of this absence. For such purposes, the period of non-availability would advantageously be made known to the scheduler, such as through a user interface.

Even in cases wherein the number of divisions (sets) is not such that neatly staggered partial jobs can be formed, such that, e.g., two out of a plurality of three printers are assigned the same number of sets, there would still be some gain in total processing time and machine usage ratio.

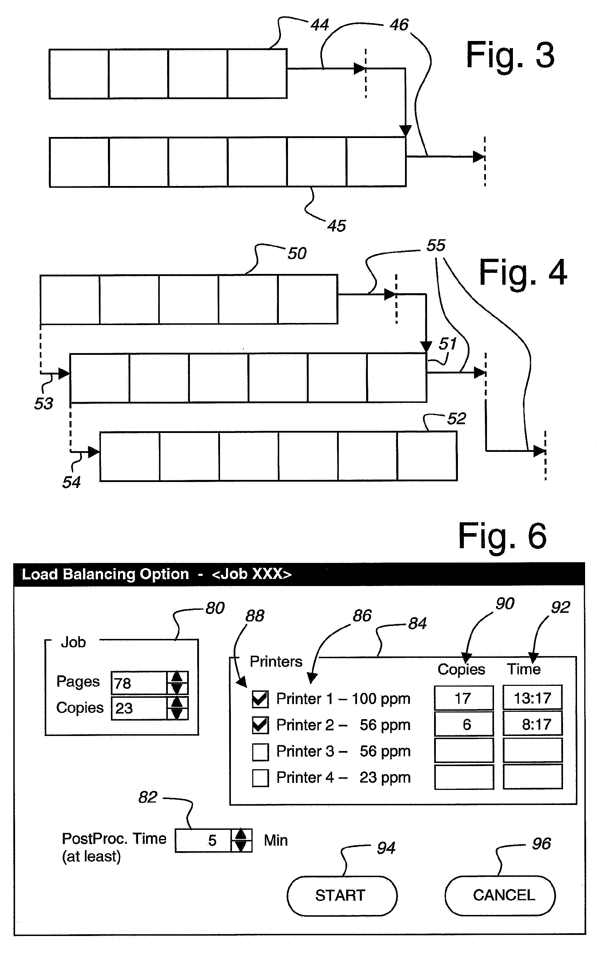

Figure 3 illustrates a second printing assignment pattern to show the improvement when the staggering of the partial jobs 44, 45 is by two blocks, where operator activity 46 needs 5/4 block length of time. In this case, the operator has to wait a brief interval after the first partial job has been taken care of.

Figure 4 illustrates a third printing assignment pattern. This case applies in situations where the printing job necessitates some initial effort by the operator before starting the partial jobs, such as for loading special print sheets or pre-printed inserts in the paper input trays of the devices. In this situation, also the starting instants of the partial jobs 50, 51, 52 are staggered by operator activity time intervals 53, 54. The dashed lines indicate operator readiness. The arrows indicate the sequence of operator's actions. If the operator needs 1 (one) block length of time 55 for post-processing as shown, also the operator has to wait a brief interval after the first partial job has been taken care of.

The above examples, jobs are split into partial jobs on set level, i.e., presuming a printing job contains a plurality of sets, sets are not broken by the division and each partial job contains an integer number of sets. Obviously, jobs may also be split on a lower level, such as print sheets. For jobs having a single set, such a division is the only one possible, but also multi-set jobs may be split on sheet level, although extra care of the operator is required to correctly consolidate the partial job outputs.

A further example of the above heuristic algorithm for calculating the "estimated time ready" accounts for present activity on earlier jobs. With three printers, P1 and P2 idle, but P3 still having to work for 10 minutes on a previous job (plus five minutes post-processing), a 60 minute job will be assigned as follows whilst ignoring granularity effects.
P1: 20 minutes partial job plus five minutes post-processing, ready after 25 minutes.
P2: 25 minutes partial job plus five minutes post-processing, ready after 30 minutes.
P3: 15 minutes previous job (inclusive post-processing), furthermore 15 minutes next partial job plus five minutes post-processing, ready after 35 minutes.

A further example has an 18 minute job and 2½ minute post-processing on each of three printers. Two feasible solutions are as follows.
According to a first solution, the printers get 4, 6 and 8 minutes of printing, respectively, assigned. Then, ready times are:
P1: 4 + 2½ = 6½
P2: 6½ + 2½ = 9 (note: having to wait for ½ minute before post-processing can start)
P3: 9 + 2½ = 11½.
According to the second solution, the printers get 3, 6 and 9 minutes printing assigned, respectively. Then, ready times are:
P1: 3 + 2½ = 5½
P2: 6 + 2½ = 8½
P3: 9 + 2½ = 11½.

The second solution is more robust, inasmuch as each post-processing interval may now run out by ½ minute before an overall delay will be experienced.

The following is an example for only two printers, a ten minute job and 2½ minute post-processing.
As a first solution, both printers get 5 minutes of the job. Then, ready times are as follows:
P1: 5 + 2½ = 7½
P2: 7½ + 2½ = 10.
As a second solution, the first printer gets 4 and the second printer gets 6 minutes of the job. Then, ready times are as follows:
P1:4+2½=6½
P2: 6½ + 2½ = 9.
Finally, in a third solution, the first the printer gets 3 and the second printer gets 7 minutes of the job. Then, ready times are as follows:
P1: 3 + 2½ = 5½
P2: 7 + 2½ = 9½.

Clearly, the second assignment schedule delivers the fastest job completion.

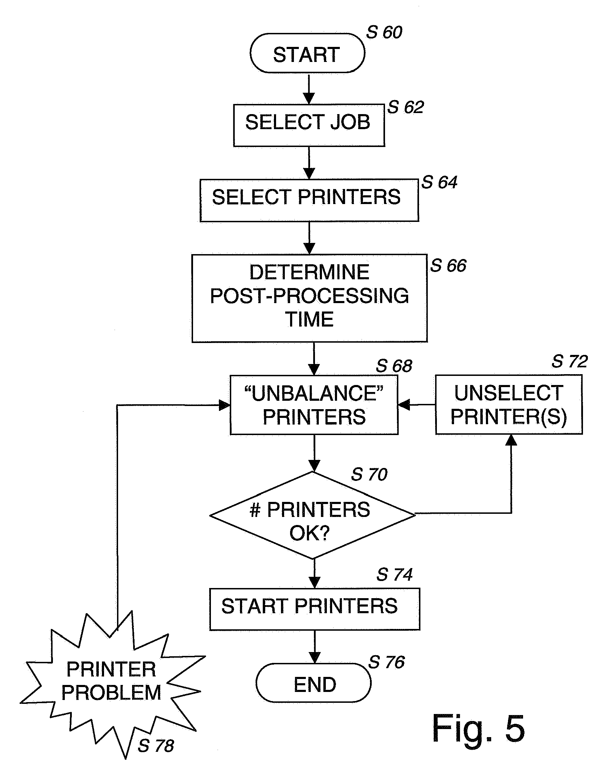

Figure 5 illustrates a sample flowchart of an assignment process for use with the invention. In block S 60, the execution starts, and hardware and software facilities are assigned as far as relevant. In block S 62, the job or jobs are selected from a task schedule. In block S 64, available printers are selected. In block S 66, the various post-processing times are determined, such as by look-up or by operator entry at the user interface of the job scheduler 22. In block S 68, the print job is split into partial jobs, which are then assigned through executing the process of the present invention. In block S 70, the system checks if the number of printers that have been assigned to the job in question is not too large. For example, a relatively small job must not be processed on too many printers, because each separate printer would need its own post-processing, that could in fact extend overall processing. If positive in block S 70, in block S 72 one or more printers are unselected, and the system reverts to block S 68 for a new division and assigning trial. If the printers have been properly "unbalanced" in block S 68 according to the present invention, in block S 74 the printers are started. In block S 76 the assigning procedure terminates. If a particular printer has to stop before fulfilling its task, as is schematically represented in item S 78, the process of Figure 5 may be entered in another point, for example, immediately in block S 68. Various simplifications have been used in Figure 5. For example, no user dialog has been shown.
Figure 6 illustrates a sample graphical user interface for the print job scheduler 22 shown in Figure 1. In the first place (but not shown for clarity), a job queue may be displayed on the display screen of the job scheduler 22. A particular job may be selected by the operator or automatically, and subsequently, various processing options may be chosen. One of these is load unbalancing, which opens the window as shown in Figure 6. Field 80 shows job details, such as the number of pages of the digital document to be printed and the number of copies to be made in total. If necessary, such as for a copying job, the operator must specify these quantities. In a more sophisticated embodiment, the operator must only specify the number of copies, while the number of pages is automatically determined upon scanning. In the latter case, the scheduler waits with calculating the assignment scheme until the number of sheets has been determined.
Field 82 indicates a post-processing time for the operator, that may be a default value ready to be adjusted by operator entry. It should be noted that the post-processing time entered in field 82 is taken as a minimum post-processing time in the assignment calculation, since it in many cases not be possible, and neither necessary, to calculate a scheme that precisely produces the entered value.
The area 84 is used for the actual job division and assignment, showing a list 86 of all available printers, each preceded by a check box (88) for the operator to indicate an intended involvement of a respective printer in the printing job. It may be noted that the various printers are listed to have different printing speeds, such as "Printer 1" having a speed of 100 prints per minute.
Upon checking one or more printers through the check boxes 88, the scheduler 22 will automatically calculate the optimum assignment according to the algorithm described in Figure 5, and show the actual assignment. In this case, printers # 1 and # 2 with different capabilities will do the work. Also, the number of copies (field 90) and the expected finishing time (field 92) are shown, so that the operator will know when to be present. If necessary, finishing will be signalled by an audio signal. Thereupon, the start button 94 may be actuated. For various purposes, a cancel button 96 is shown as well. Note that the user interface may contain various (other) high-level facilities.

Although not shown in Figure 6, the user interface may also include a field for the operator to enter certain periods of operator non-availability, e.g. a lunch break. The scheduler may then take such periods into account by avoiding partial jobs to end in those periods.

Various other aspects of the invention may play a part:
1. The time difference between print job endings may also be automatically determined by the scheduler 22 on the basis of the job data and the job division scheme (possibly in an iterative process). For instance, in case of the print job being divided into large partial jobs that need careful handling, the scheduler may automatically assign time differences that are relatively large, but when the partial jobs are small, the time differences may be made smaller, since the operator may need less time to handle them.
2. Not all printers need to be identical. If local throughput of a particular printer is different, only the termination instants scheduling needs to be considered for the assigning. Note that assigning the partial job that will end last to the fastest printer will speed-up overall throughput since this printer is most productive (cf. Figure 6, wherein Printer 2, the slowest one, is scheduled to finish after 8:17 minutes, whereas Printer 1, which is faster, runs 13:17 minutes). More generally, in case of several printers all having different throughputs, the termination instants would be ordered in a series according thereto, with the fastest printer ending last and the slowest printer ending first.
3. Upon unforeseen stopping of a particular printer, the scheduling for the other printers may be re-calculated in a dynamic manner for again attaining the best result. The converse applies when a particular printer comes up again after such interrupt, or when an additional printer is added to the pool.

Now, the present invention has hereinabove been disclosed with reference to preferred embodiments thereof. Persons skilled in the art will recognize that numerous modifications and changes may be made thereto without exceeding the scope of the appended Claims. In consequence, the embodiments should be considered as being illustrative, and no restriction should be construed from those embodiments, other than as have been recited in the Claims.

## Claims

1. A method for executing a printing job on a plurality of printer facilities comprising dividing said printing job into partial jobs and selectively assigning each said partial job to a respective printer facility for attaining an improved throughput for said printing job,
the method being **characterized by**
structuring a job termination pattern by assigning to a particular printer facility of said plurality a partial job that will complete earlier than a partial job assigned to another printer facility of said plurality by a time difference based on a predetermined non-zero time interval.

2. A method as claimed in Claim 1, further comprising
enabling an operator to define said predetermined time interval.

3. A method as claimed in Claim 1 or 2, further comprising
arranging the dividing and assigning steps so as to structure a job termination pattern, based on said predetermined time interval, forming a sequence of partial job completion time instants constituting a monotonously increasing series.

4. A method as claimed in Claim 3, further comprising
arranging the dividing and assigning steps so as to structure a job termination pattern having time differences between job completion time instants, that are each at least as long as said predetermined time interval.

5. A method as claimed in Claim 3, further comprising
arranging the dividing and assigning steps so as to structure a job termination pattern having time differences between job completion time instants, most of which are at least as long as said predetermined time interval.

6. A method as claimed in Claim 4, wherein said time differences are substantially equal.

7. A method as claimed in Claim 1, wherein said partial jobs differ by an integer number of print copies within said printing job.

8. A method as claimed in Claim 1, wherein said partial jobs differ on a lower level of granularity than print copies within said printing job, such as a level of sub-sets or print sheets.

9. A method as claimed in Claim 1, wherein said plurality of printer facilities includes printer facilities having mutually disparate throughput speeds, wherein the dividing and assigning steps are based on the throughput speeds of the various printer facilities.

10. A method as claimed in Claim 9, further comprising assigning the last partial job termination instant to the printer facility with the highest throughput speed.

11. A method as claimed in Claim 1, wherein the dividing and assigning steps are based on temporal availability of the various printer facilities.

12. A method as claimed in Claim 1, wherein the dividing and assigning steps comprise assigning non-uniform partial job starting time instants to said various printer facilities.

13. An apparatus for controlling execution of a printing job on a plurality of printer facilities for attaining an improved throughput for said printing job, including a job scheduler for dividing said printing job into partial jobs and for selectively assigning each said partial job to a respective printer facility,
said apparatus being **characterized in that**
said job scheduler is arranged for structuring a job termination pattern by assigning to a particular printer facility of said plurality a partial job that will complete earlier than a partial job assigned to another printer facility of said plurality by a time difference based on a predetermined non-zero time interval.

14. An apparatus as claimed in Claim 13, further including
a user interface for entering control parameters, that is adapted to enable an operator to define said predetermined time interval.

15. An apparatus as claimed in any of Claims 13 and 14, wherein said job scheduler is arranged for structuring a job termination pattern, based on said predetermined time interval, forming a sequence of partial job completion time instants constituting a monotonously increasing series.

16. An apparatus as claimed in Claim 13, wherein said job scheduler is arranged for dividing a printing job on a level of copies of said printing job.

17. An apparatus as claimed in Claim 13, wherein said job scheduler is arranged for dividing a printing job on a lower level of granularity than print copies within said printing job, such as a level of sub-sets or print sheets.
